# EUROPEAN PATENT APPLICATION

(11) **EP 3 726 388 A1**
(43) Date of publication of application: **21.10.2020**
(21) Application number: 18889511.4
(22) Date of filing: 15.12.2018
(51) Int. Cl.: G06F 12/00, G06F 16/00

(54) **METHOD FOR ENABLING ACCESS TO PAST TRANSACTION IN BLOCKCHAIN NETWORK, AND NODE**

(30) Priority: 16.12.2017 JP 2017241256
(71) Applicant: bitFlyer Blockchain, Inc., Minato-ku Tokyo 1076237 (JP)
(72) Inventor: KANO Yuzo, Tokyo 107-6237 (JP); KOMIYAMA Takafumi, Tokyo 107-6237 (JP)
(74) Representative: Pinney, Matthew David
(86) International application number: PCT/JP2018/046214
(87) International publication number: WO 2019/117311

(57) **Abstract**

Provided is a method for efficiently enabling access to a past transaction in a blockchain network. A first node 101 generates a new block from one or more transactions accumulated by using, as a memory pool, the storage unit 101C or a storage device or a storage medium accessible from the first node 101 (S201). When an adoption of the generated block is agreed upon in the blockchain network (100), the generated block is added to the blockchain at each node (S202). In an embodiment of the present invention, various consensus algorithms can be used, but it is required that the algorithm has finality. Each node generates and stores an identifier for uniquely identifying each transaction based on the height of the added block and the order within the block (S203).

## Description

### TECHNICAL FIELD

The present invention relates to a method for enabling access to a past transaction in a blockchain network and a node which is part of the network.

### BACKGROUND

In a blockchain network comprising a plurality of nodes, each node has a blockchain with a series of blocks on which consensus on adoption has been formed. Each block has a header and a body including one or more transactions.

Each transaction may take the hash value of the transaction as its identifier, and such an identifier may be referred to as a "transaction identifier" (txid). A txid may be used to refer to a prior transaction, and as appropriate, a dictionary of txids may be maintained at one or more or all nodes.

### SUMMARY

### Technical Problem

However, a txid is generally a 32-byte hash value, and as the number of transactions increases, the corresponding txid data becomes huge. Data bloat leads to slow access speed when using txids.

The present invention is made in view of such a problem, and its objective is to provide a method for efficiently enabling access to a past transaction in a blockchain network, a program for the method, and a node used as a part of the network.

### Solution to the Problem

To achieve the objective, the first aspect of the present invention is a method for enabling access to a past transaction in a blockchain network, for a block on which a consensus is made under a consensus algorithm with finality, with respect to each transaction included in the block, the method comprising the step of a node which is part of the blockchain network storing an identifier that is based on height of the block and order of the transaction within the block.

Also, the second aspect of the present invention is the method of the first aspect, wherein one or more conditions associated with one or more transactions are specified in the blockchain network, and one or more identifiers corresponding to one or more transactions associated with one or more specified conditions are stored.

Also, the third aspect of the present invention is the method of the second aspect, wherein the condition is an address of a virtual currency or a cryptocurrency.

Also, the fourth aspect of the present invention is the method of any one of the first to the third aspects, wherein the identifier has a block high region of a first number of bytes and an order region of a second number of bytes.

Also, the fifth aspect of the present invention is the method of the fourth aspect, wherein the first number of bytes is three or four.

Also, the sixth aspect of the present invention is the method of the fourth aspect, wherein the second number of bytes is one or two.

Also, the seventh aspect of the present invention is the method of any one of the fourth to sixth aspects, wherein a number of bytes of the identifier is any one of four to six.

Also, the eighth aspect of the present invention is a program for having a computer to perform a method for enabling access to a past transaction in a blockchain network, for a block on which a consensus is made under a consensus algorithm with finality, with respect to each transaction included in the block, the method comprising the step of a node which is part of the blockchain network storing an identifier that is based on height of the block and order of the transaction within the block.

Also, A ninth aspect of the present invention is a node which is part of a blockchain network which enables access to a past transaction, wherein the node, for a block on which a consensus is made under a consensus algorithm with finality, with respect to each transaction included in the block, stores an identifier that is based on height of the block and order of the transaction within the block.

Also, the tenth aspect of the present invention is a method for enabling access to a past transaction of a blockchain network, for a block on which a consensus is made under a consensus algorithm with finality, with respect to each transaction included in the block, the method comprising the step of a computer storing an identifier that is based on height of the block and order of the transaction within the block, wherein the computer can access a blockchain maintained by a node which is part of the blockchain network.

According to one aspect of the present invention, for a block on which a consensus is made under a consensus algorithm with finality, with respect to each transaction included in the block, each transaction can be identified using an identifier that is based on the height of the block and the order of the transaction within the block to avoid bloating of the data amount.

### BRIEF DESCRIPTION OF THE DRAWINGS

FIG. 1 is a diagram showing a blockchain network according to one embodiment of the present invention.

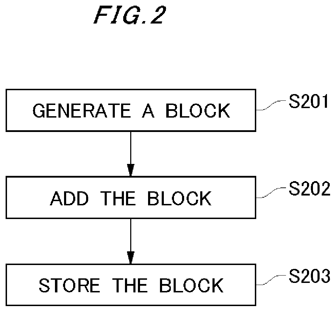

FIG. 2 is a diagram illustrating a method for efficiently enabling access to a past transaction according to one embodiment of the present invention.

### DETAILED DESCRIPTION

The embodiments of the present invention will be described in detail with reference to the drawings below.

### (First embodiment)

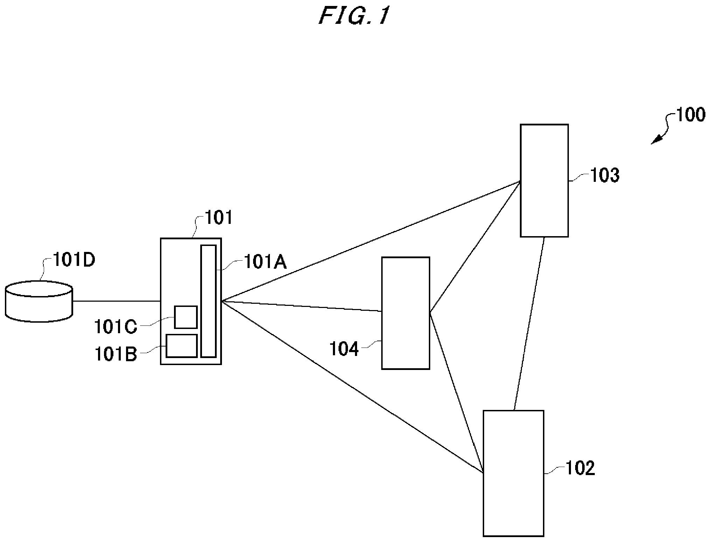

Figure 1 shows a blockchain network according to the first embodiment of the present invention. The network 100 comprises a first node 101, a second node 102, a third node 103, and a fourth node 104. Each of these nodes will have a blockchain and will participate in the consensus building for the adoption of a new block. In FIG. 1, an example of four is shown, but this is only an example. Alternatively, the network 100 may comprise a node that do not participate in consensus building.

The first node 101 comprises a communication unit 101A such as a communication interface, etc., a processing unit 101B such as a processor, a CPU, etc., and a storage unit 101C including a storage device or a storage medium such as a memory, a hard disk, etc., and it can be configured by executing a program to perform each process. The first node 101 may include one or more devices or servers. The program may include one or more programs, and may be recorded on a computer-readable storage medium to form a non-transitory program product.

The first node 101 generates a new block from one or more transactions accumulated by using, as a memory pool, the memory unit 101C or a storage device or a storage medium accessible from the first node 101 (S201).

The generated block is added to the blockchain at each node if a consensus is made on its adoption in the blockchain network 100 (S202). In this embodiment, various consensus algorithms can be adopted, provided that they are consensus algorithms with finality. Here, "finality" means that once a consensus is formed with respect to a block, all of the nodes that behave normally cannot overturn the consensus. In addition, it is appropriate that the added blocks can be ordered and that the order is not overturned.

Specifically, if some sort of a fork in one blockchain can occur, assuming it converges into any one chain, the consensus made for the unselected chain will be overturned, and in this case there is no finality. Also, in the present embodiment, in addition to the fact that the consensus algorithm has finality, it is required that one or more transactions are orderable within each block.

Each node can generate an identifier that uniquely identifies each transaction based on the height of the added block and its order within the block (S203). Here, we refer to said identifier as "transaction pointer (txp)". The generated txp can be stored in the database 101D, as illustrated with respect to the first node 101. Of course, it can also be stored in the storage unit 101C or a storage device or a storage medium accessible from the first node 101, but below explanation will be made under the example where the generated txp is stored in the database 101D.

In the above description, an identifier txp is generated after a block is added, but it may be generated before a block is added. However, in order for a txp to be validly stored at each node, it must be after the addition of the block. Also, a txp need not necessarily be generated and stored for every transaction. Also, it may be stored at appropriate times, rather than immediately after a block addition.

A txp can be described, for example, as 321:3 when the height of the block is 321 and the transaction is placed third in the body of the block. The first three digits represent the block height and the last digit represents the order of the transaction.

More generally, a txp has a block height region of a first number of bytes and an order region of a second number of bytes. By way of example, the first number of bytes is three bytes and the second number of bytes is one byte, depending on the height of the blockchain and the size of the block to be allowed. By making the first number of bytes to be 3 to 4 bytes and the second number of bytes to be 1 to 2 bytes, totaling about 4 to 6 bytes, it is possible to support blockchain network 100 suitable for a wide range of applications.

Whereas conventionally, a hash value of 32 bytes has been used in uniquely identifying past transactions included in a block added to the blockchain, in the present embodiment, a txp that is based on the height of the added block and the order of the transaction in the block can be identified, and by storing this as necessary, the amount of data can be greatly reduced and a unique reference to a past transaction can be made possible.

When a block is added, one or more transactions included within the block are executed, often changing the state of each node. For example, in a blockchain network for transmission of a virtual currency or cryptocurrency, when a transaction for transmission from address A to address B is executed, the status of the balance of address A and the balance of address B changes respectively. If txp is used when such deposits and withdrawals are repeated, the deposit and withdrawal histories of addresses A and B can be stored in a much smaller storage area than in the past.

In other words, in order to store the deposit and withdrawal histories of one or more addresses, for each added block, by using each address as a key, it is sufficient to store a txp corresponding to the transaction associated with the key in the block. Such use of txp is not limited to the history of deposits and withdrawals of a virtual or cryptocurrency, but also allows generation of history data associated with a key by specifying a state of each node that fluctuates as a transaction is executed as the key beforehand or afterwards.

Also, not limited to the above, but more generally, txp can be utilized when it is desired to store information about one or more transactions that meet a certain condition. For example, if transactions with transmission amount of 1 million yen or more are to be extracted, "more than 1 million yen" should be the condition to be specified. A list of one or more txps corresponding to one or more transactions that satisfy the condition may be stored.

In addition to improving the speed of access to historical data by being able to store historical data associated with a certain condition with a suppressed amount of data, the txp of the present invention includes a block height and transaction order in itself, thus speeding up the search against the blockchain.

It is to be noted that if the term "only" is not written, such as in "based only on x", "in response to x only", or "in the case of x only", in the present specification, it is assumed that additional information may also be taken into account.

In addition, as a caveat, even if there are aspects of a method, program, terminal, apparatus, server or system (hereinafter referred to as "method, etc.") that perform operations different from those described herein, each aspect of the invention is intended to perform the same operation as one of the operations described herein, and the existence of an operation different from those described herein does not mean that the method, etc. is outside the scope of each aspect of the invention.

### (Second embodiment)

In the first embodiment, an embodiment in which the storage of a list of one or more txps is performed at each node which is part of the blockchain network 100 has been described. However, the list of one or more txps may be stored as historical data only at any one of the nodes that is part the blockchain network 100. The node may or may not participate in consensus formation, and can acts as an application node that performs the processing required for a particular application.

Alternatively, the blockchain possessed by any node of the blockchain network 100 may be accessed by an external computer of the blockchain network 100, and a list of one or more txps adapted for an application may be stored in the external computer. The external computer may access transactions in the blockchain based on the stored txps.

### (Third embodiment)

By the history data according to the first or second embodiment, a retrieval in which the date and time are specified can be performed since the information on the block height included in a txp corresponds to the addition time of each block. For example, txps representing transactions included in blocks after 1:00 a.m. three days ago may be extracted, or transactions included in blocks after 1:00 a.m. three days ago that satisfy a certain condition may be extracted.

Preferably, the node providing such a retrieval function maintains a correspondence, such as a correspondence table, between block heights and their times of addition or finalization.

### REFERENCE SIGNS LIST

- 100: blockchain network
- 101: first node
- 101A: communications unit
- 101B: processing unit
- 101C: storage unit
- 101D: database
- 102: second node
- 103: third node
- 104: fourth node

## Claims

1. A method for enabling access to a past transaction in a blockchain network, comprising the step of:
for a block on which a consensus is made under a consensus algorithm with finality, with respect to each transaction included in the block, a node which is part of the blockchain network storing an identifier that is based on height of the block and order of the transaction within the block.

2. The method according to claim 1,
wherein one or more conditions associated with one or more transactions are specified in the blockchain network, and
wherein one or more identifiers corresponding to one or more transactions associated with one or more specified conditions are stored.

3. The method according to claim 2, wherein the condition is an address of a virtual currency or a cryptocurrency.

4. The method according to any one of claims 1 to 3, wherein the identifier has a block height area with a first number of bytes and an order area with a second number of bytes.

5. The method according to claim 4, wherein the first number of bytes is three or four.

6. The method according to claim 4, the second number of bytes is one or two.

7. The method according to any one of claims 4 to 6, wherein a number of bytes of the identifier is any one of 4 to 6.

8. A program for having a computer to perform a method for enabling access to a past transaction in a blockchain network, the method comprising the step of:
for a block on which a consensus is made under a consensus algorithm with finality, with respect to each transaction included in the block, a node which is part of the blockchain network storing an identifier that is based on height of the block and order of the transaction within the block.

9. A node which is part of a blockchain network which enables access to a past transaction,
wherein the node, for a block on which a consensus is made under a consensus algorithm with finality, with respect to each transaction included in the block, stores an identifier that is based on height of the block and order of the transaction within the block.

10. A method for enabling access to a past transaction of a blockchain network, comprising the step of:
for a block on which a consensus is made under a consensus algorithm with finality, with respect to each transaction included in the block, a computer storing an identifier that is based on height of the block and order of the transaction within the block,
wherein the computer can access a blockchain maintained by a node which is part the blockchain network.
